# EUROPEAN PATENT APPLICATION

(11) **EP 4 617 670 A1**
(43) Date of publication of application: **17.09.2025**
(21) Application number: 23888622.0
(22) Date of filing: 02.11.2023
(51) Int. Cl.: G01N 35/00

(54) **ANALYTE SPECIMEN ANALYSIS DEVICE, AND CALIBRATION CURVE GENERATION METHOD**

(30) Priority: 08.11.2022 JP 2022178794
(71) Applicant: SHIMADZU CORPORATION, Kyoto-shi, Kyoto 604-8511 (JP)
(72) Inventor: SUGIYAMA, Kiyohiro, Kyoto-shi, Kyoto 604-8511 (JP); MATSUMOTO, Junichi, Kyoto-shi, Kyoto 604-8511 (JP); SUDO, Tomokazu, Kyoto-shi, Kyoto 604-8511 (JP)
(74) Representative: Müller-Boré & Partner Patentanwälte PartG mbB
(86) International application number: PCT/JP2023/039656
(87) International publication number: WO 2024/101274

(57) **Abstract**

A specimen sample analyzer (100) includes a specimen measurement unit (1) configured to measure a specimen sample, a calibration curve generator (30) configured to generate a calibration curve (21) to be used in an analysis of the specimen sample based on measurement data (20) of the specimen sample acquired by the specimen measurement unit, and a display (2) configured to display at least a measurement status (22a) of a blank sample (90) that does not contain an object to be tested.

## Description

### Technical Field

The present invention relates to a specimen sample analyzer and a calibration curve generation method, and more particularly, it relates to a specimen sample analyzer and a calibration curve generation method each for generating a calibration curve using a plurality of reference materials.

### Background Art

Conventionally, an X-ray imaging apparatus for generating a calibration curve using a plurality of reference materials is known. Such an X-ray imaging apparatus is disclosed in Japanese Patent No. 5501205, for example.

Japanese Patent No. 5501205 discloses an automatic analysis system including a specimen rack loading unit, an ID reader, a transport line, a specimen rack waiting unit, an analysis module, a specimen rack recovery unit, and a computer. Furthermore, Japanese Patent No. 5501205 discloses a configuration for generating a calibration curve to be used in the analysis of a patient specimen using a plurality of reference materials arranged on a specimen rack. Japanese Patent No. 5501205 also discloses a configuration for displaying information on the plurality of reference materials. Specifically, Japanese Patent No. 5501205 discloses a configuration for displaying, as the information on the reference materials, information for identifying the reference materials to be used, the rack loading status, and information on the arrangement of the reference materials on the rack.

### Prior Art

### Patent Document

Patent Document 1: Japanese Patent No. 5501205

### Summary of the Invention

### Problem to be Solved by the Invention

Although not disclosed in Japanese Patent No. 5501205, when an object to be tested is analyzed using a calibration curve, not only a patient specimen (containing the object to be tested) but also a blank sample not containing the object to be tested may be measured. However, in the configuration disclosed in Japanese Patent No. 5501205, the measurement statuses of the reference materials (reference samples) are displayed on the screen, but the measurement status of the blank sample is not displayed. In such a case, it is difficult for a user to know whether the blank sample is being measured or not.

The present invention is intended to solve the above problem. The present invention aims to provide a specimen sample analyzer and a calibration curve generation method that each allow a user to easily know whether a blank sample is being measured or not when the blank sample is measured to generate a calibration curve.

### Means for Solving the Problem

In order to attain the aforementioned object, a specimen sample analyzer according to a first aspect of the present invention includes a specimen measurement unit configured to measure a specimen sample, a calibration curve generator configured to generate a calibration curve to be used in an analysis of the specimen sample based on measurement data of the specimen sample acquired by the specimen measurement unit, and a display configured to display at least a measurement status of a blank sample that does not contain an object to be tested.

A calibration curve generation method according to a second aspect of the present invention is a calibration curve generation method for generating a calibration curve to acquire an analysis result of a specimen sample based on measurement data acquired by measuring the specimen sample, and includes steps of acquiring the measurement data, generating the calibration curve based on the measurement data, and displaying at least a measurement status of a blank sample that does not contain an object to be tested.

### Advantageous Effect of the Invention

In the specimen sample analyzer according to the first aspect and the calibration curve generation method according to the second aspect, as described above, at least the measurement status of the blank sample that does not contain the object to be tested is displayed. Accordingly, a user can know at least the measurement status of the blank sample when the calibration curve is generated. Consequently, when the blank sample is measured to generate the calibration curve, the user can easily know whether the blank sample is being measured or not.

### Brief Description of the Drawings

FIG. 1 is a schematic view showing the overall configuration of a specimen sample analyzer according to an embodiment.
FIG. 2 is a schematic view for illustrating a calibration curve generated by the specimen sample analyzer according to the embodiment.
FIG. 3 is a schematic view for illustrating the configuration of the specimen sample analyzer for generating the calibration curve according to the embodiment.
FIG. 4 is a schematic view for illustrating the configuration of the specimen sample analyzer for displaying the calibration curve according to the embodiment.
FIG. 5 is a schematic view for illustrating the configuration of the specimen sample analyzer for displaying the measurement status of a blank sample and the measurement statuses of a plurality of reference samples according to the embodiment.
FIG. 6 is a schematic view for illustrating the control configuration of the specimen sample analyzer for displaying a measurement status display screen according to the embodiment.
FIG. 7 is a flowchart for illustrating a process by the specimen sample analyzer to generate and display the calibration curve according to the embodiment.
FIG. 8 is a flowchart for illustrating a process by the specimen sample analyzer to display the measurement statuses according to the embodiment.

### Modes for Carrying Out the Invention

An embodiment embodying the present invention is hereinafter described on the basis of the drawings.

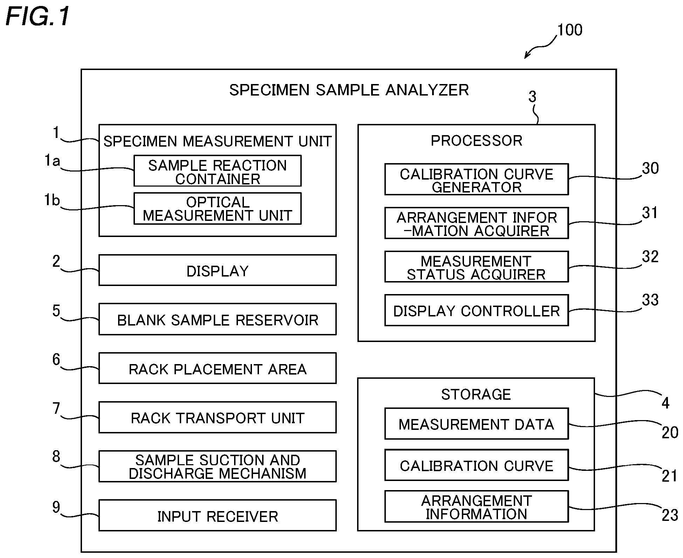

The overall configuration of a specimen sample analyzer 100 according to the embodiment of the present invention is now described with reference to FIG. 1.

As shown in FIG. 1, the specimen sample analyzer 100 is an apparatus for analyzing a specimen sample. Specifically, the specimen sample analyzer 100 performs a quantitative analysis of an object to be tested contained in the specimen sample by optically measuring the specimen sample. In this embodiment, the specimen sample analyzer 100 is configured to perform a quantitative analysis of the specimen sample using a calibration curve 21. The specimen sample analyzer 100 is, for example, a blood testing apparatus, a urine testing apparatus, or a clinical chemistry analyzer.

As shown in FIG. 1, the specimen sample analyzer 100 includes a specimen measurement unit 1, a display 2, and a processor 3. The specimen sample analyzer 100 also includes a storage 4, a blank sample reservoir 5, a rack placement area 6, a rack transport unit 7, a sample suction and discharge mechanism 8, and an input receiver 9.

The specimen measurement unit 1 is configured to measure the specimen sample. In this embodiment, the specimen measurement unit 1 includes a sample reaction container 1a and an optical measurement unit 1b. The specimen measurement unit 1 is configured to react the specimen sample with a reagent in the sample reaction container 1a and optically measure the specimen sample using the optical measurement unit 1b. The specimen sample is a specimen such as blood or urine, or a liquid sample containing an object to be tested such as a chemical material. In other words, the specimen measurement unit 1 is configured to perform a quantitative analysis of the object to be tested contained in the specimen sample by measuring the absorbance of the specimen sample.

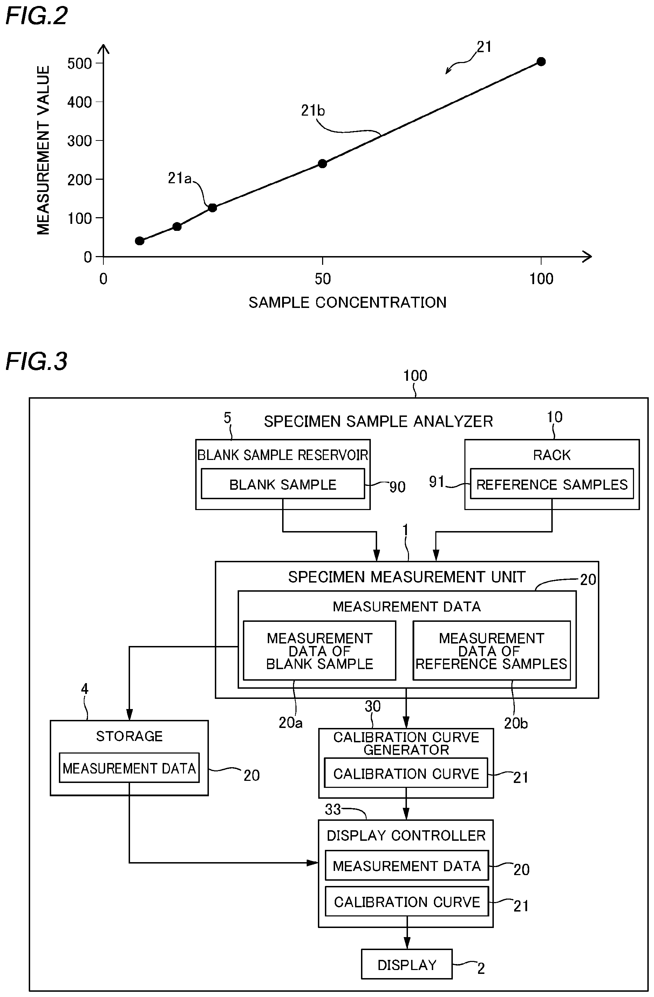

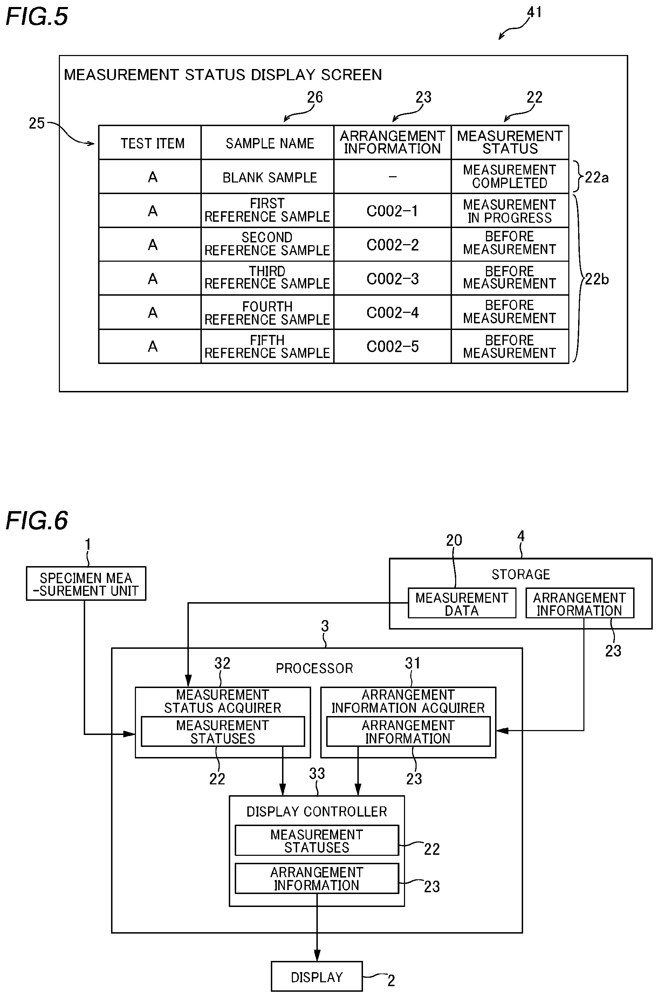

The display 2 is configured to display at least the measurement status 22a (see FIG. 5) of a blank sample 90 (see FIG. 3) that does not contain the object to be tested. The display 2 includes a liquid crystal monitor, for example.

The processor 3 is configured to control each portion of the specimen sample analyzer 100. The processor 3 includes a central processing unit (CPU) or circuitry, memories such as a read-only memory (ROM) and a random access memory (RAM), etc.

The processor 3 includes a calibration curve generator 30, an arrangement information acquirer 31, a measurement status acquirer 32, and a display controller 33. The calibration curve generator 30, the arrangement information acquirer 31, the measurement status acquirer 32, and the display controller 33 are configured in software as functional blocks that are achieved when the processor 3 executes various programs stored in the storage 4. The calibration curve generator 30, the arrangement information acquirer 31, the measurement status acquirer 32, and the display controller 33 may be configured as separate hardware by providing dedicated processors (processing circuits).

The calibration curve generator 30 is configured to generate the calibration curve 21 to be used in the analysis of the specimen sample, based on measurement data 20 of the specimen sample acquired by the specimen measurement unit 1. The configuration of the calibration curve generator 30 for generating the calibration curve 21 is described in detail below.

The arrangement information acquirer 31 is configured to acquire arrangement information 23 of a reference sample 91 (see FIG. 3) arranged on a rack 10 (see FIG. 3). The rack 10 includes a plurality of holders and is configured to hold a plurality of reference samples 91. Specifically, the rack 10 is configured to hold the reference samples 91 by holding containers in which the reference samples 91 are accommodated. The arrangement information acquirer 31 is configured to acquire the arrangement information 23 that is preset by a user, for example. In this embodiment, the arrangement information 23 is preset by the user and stored in the storage 4. The arrangement information 23 includes information on the rack 10 on which the reference samples 91 are arranged and information on the arrangement in the rack 10. The information on the rack 10 is a rack name, for example. The information on the arrangement in the rack 10 is information indicating which holder of the rack 10 the reference sample 91 is held in, and includes the name of the holder or a number assigned to each holder, for example. In this embodiment, the arrangement information acquirer 31 is configured to acquire the arrangement information 23 stored in the storage 4.

The measurement status acquirer 32 is configured to acquire the measurement statuses 22 (see FIG. 5) of the samples. In this embodiment, the measurement status acquirer 32 is configured to acquire the measurement status 22a (see FIG. 5) of the blank sample 90 and the measurement statuses 22b (see FIG. 5) of the plurality of reference samples 91. The configuration of the measurement status acquirer 32 for acquiring the measurement status 22a of the blank sample 90 and the measurement statuses 22b of the plurality of reference samples 91 is described in detail below.

The display controller 33 is configured to perform a control to display the calibration curve 21 generated by the calibration curve generator 30 on the display 2. The display controller 33 is also configured to perform a control to display, on the display 2, the measurement statuses 22 obtained when the specimen samples are measured by the specimen measurement unit 1. The control by the display controller 33 to display the calibration curve 21 and the control to display the measurement statuses 22 are described in detail below.

The storage 4 is configured to store various programs to be executed by the processor 3. The storage 4 is also configured to store the measurement data 20 measured by the specimen measurement unit 1, the calibration curve 21, and the arrangement information 23. The storage 4 includes a non-volatile storage device such as a hard disk drive (HDD) or a solid state drive (SSD).

The blank sample reservoir 5 is configured to store the blank sample 90. The blank sample reservoir 5 is provided at a position different from the position of the rack placement area 6 inside the specimen sample analyzer 100. In this embodiment, the blank sample 90 is water stored in the blank sample reservoir 5. That is, the specimen sample analyzer 100 uses the water stored inside the device as the blank sample 90.

In the rack placement area 6, the rack 10 (see FIG. 3) on which the plurality of reference samples 91 are arranged is arranged. The rack placement area 6 is provided at a predetermined position of the specimen sample analyzer 100. The rack 10 on which the plurality of reference samples 91 are arranged is arranged by the user such that the rack 10 is arranged in the rack placement area 6.

That is, the specimen sample analyzer 100 according to this embodiment uses the blank sample 90 and the plurality of reference samples 91 arranged at different positions from each other when generating the calibration curve 21.

The rack transport unit 7 is configured to transport the rack 10 arranged in the rack placement area 6 to a position at which the samples are suctioned by the sample suction and discharge mechanism 8. The rack transport unit 7 is a transport device that includes a drive device such as a stepping motor, a power transmission mechanism such as a belt and pulley mechanism, and a holder that holds the rack 10, for example, and transports the rack 10.

The sample suction and discharge mechanism 8 is configured to suction the reference sample 91 held in the rack 10 transported by the rack transport unit 7, and discharge it into the specimen measurement unit 1. The sample suction and discharge mechanism 8 includes, for example, a horizontal movement mechanism, a vertical movement mechanism, a nozzle for suctioning and discharging the sample, a pump for suctioning and discharging the sample.

The input receiver 9 is configured to receive an operation input from an operator. The input receiver 9 includes, for example, input devices such as a keyboard and a mouse. The input receiver 9 may be a touch panel formed integrally with the display 2.

### Calibration Curve

The calibration curve 21 is now described with reference to FIG. 2. The calibration curve 21 is a line showing the relationship between a measurement value and a sample concentration, which is generated using the plurality of reference samples 91 (see FIG. 3) with known concentrations of the object to be tested in order to acquire the concentration of the object to be tested. As the reference samples 91, samples with known concentrations are used depending on an object to be tested and an item to be tested. For example, when a blood test is performed to analyze the concentration of hemoglobin in blood, hemoglobin samples with known concentrations are used as the reference samples 91.

In the calibration curve 21 shown in FIG. 2, the horizontal axis represents the sample concentration, and the vertical axis represents the measurement value. The calibration curve generator 30 (see FIG. 1) generates the calibration curve 21 based on the measurement data 20 (see FIG. 1). Specifically, the calibration curve generator 30 plots points 21a of the measurement values for the concentrations of the reference samples 91, and connects the points 21a with a line 21b to generate the calibration curve 21. The calibration curve generator 30 may be configured to acquire an approximate curve based on the points 21a as the calibration curve 21.

### Generation of Calibration Curve

The configuration of the specimen sample analyzer 100 for generating the calibration curve 21 and displaying it on the display 2 is now described with reference to FIG. 3.

The specimen measurement unit 1 is configured to acquire measurement data 20a of the blank sample 90. In this embodiment, the specimen measurement unit 1 is configured to measure the blank sample 90 stored in the blank sample reservoir 5. Specifically, the sample suction and discharge mechanism 8 (see FIG. 1) suctions the blank sample 90 stored in the blank sample reservoir 5 and discharges it into the sample reaction container 1a (see FIG. 1). When the specimen measurement unit 1 performs measurement, the sample suction and discharge mechanism 8 also suctions a reaction reagent according to the test and discharges it into the sample reaction container 1a. Then, the blank sample 90 and the reaction reagent discharged into the sample reaction container 1a are stirred. After the blank sample 90 and the reaction reagent are stirred, the sample reaction container 1a is moved to the optical measurement unit 1b (see FIG. 1).

The optical measurement unit 1b measures the blank sample 90 after the blank sample 90 and the reaction reagent are stirred in the sample reaction container 1a. In this embodiment, the optical measurement unit 1b measures the absorbance of the blank sample 90 in the sample reaction container 1a. The specimen measurement unit 1 then outputs measurement data 20a of the blank sample 90 to the calibration curve generator 30. The specimen measurement unit 1 also outputs the measurement data 20a of the blank sample 90 to the storage 4.

The specimen measurement unit 1 is configured to acquire measurement data 20b of the plurality of reference samples 91 with known concentrations of the object to be tested. Specifically, the sample suction and discharge mechanism 8 suctions the reference samples 91 held in the rack 10 arranged in the rack placement area 6 (see FIG. 1) and discharges them into the sample reaction container 1a. The sample suction and discharge mechanism 8 also suctions the reaction reagent according to the test and discharges it into the sample reaction container 1a. The reference samples 91 and the reaction reagent are then stirred in the sample reaction container 1a. After the reference samples 91 and the reaction reagent are stirred, the sample reaction container 1a is moved to the optical measurement unit 1b.

The optical measurement unit 1b measures the reference samples 91 after the reference samples 91 and the reaction reagent are stirred in the sample reaction container 1a. In this embodiment, the specimen measurement unit 1 measures the absorbances of the reference samples 91 in the sample reaction container 1a. In this embodiment, the specimen measurement unit 1 measures the absorbances of five reference samples 91 with different concentrations as the plurality of reference samples 91, and acquires the measurement data 20b of each of the five reference samples 91. Then, the specimen measurement unit 1 outputs the acquired measurement data 20b of each of the reference samples 91 to the calibration curve generator 30. Furthermore, the specimen measurement unit 1 outputs the measurement data 20b of each of the reference samples 91 to the storage 4.

The calibration curve generator 30 acquires the measurement data 20a of the blank sample 90 and the measurement data 20b of the plurality of reference samples 91 output from the specimen measurement unit 1. The calibration curve generator 30 is configured to generate the calibration curve 21 based on the measurement data 20a of the blank sample 90 and the measurement data 20b of the plurality of reference samples 91 acquired by the specimen measurement unit 1. The calibration curve generator 30 then outputs the generated calibration curve 21 to the display controller 33.

The display controller 33 acquires the calibration curve 21 output from the calibration curve generator 30. The display controller 33 also acquires the measurement data 20 from the storage 4. Then, the display controller 33 outputs the acquired measurement data 20 and calibration curve 21 to the display 2.

The display 2 displays the measurement data 20 and the calibration curve 21 output from the display controller 33.

### Calibration Curve Display Screen

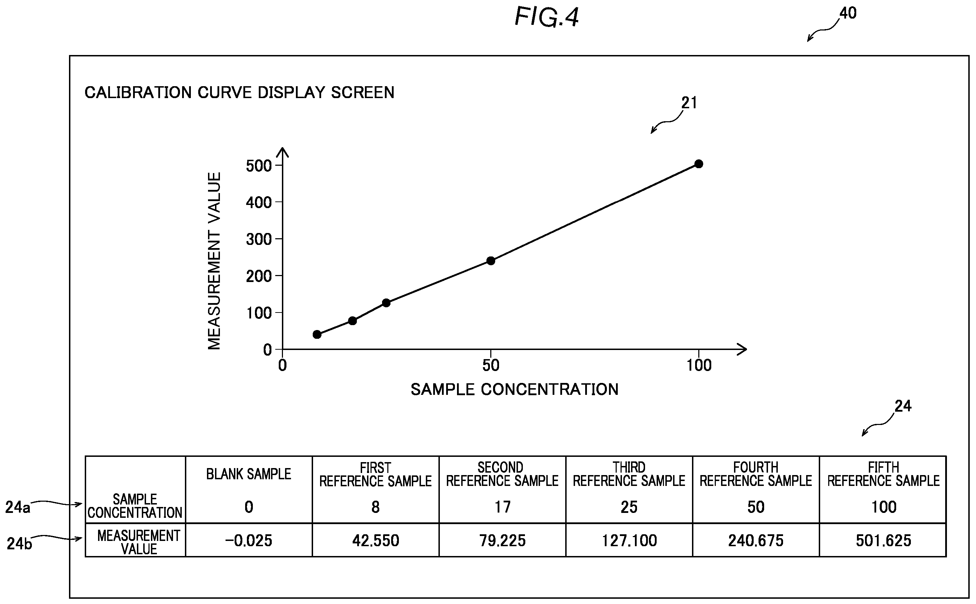

In this embodiment, as shown in FIG. 4, the display 2 (see FIG. 3) is configured to display the generated calibration curve 21. A calibration curve display screen 40 shown in FIG. 4 is a screen example when the display 2 displays the calibration curve 21.

In this embodiment, the display 2 displays the calibration curve 21 as well as a table 24 of the measurement data 20 (see FIG. 3) used to generate the calibration curve 21.

The table 24 includes a display column 24a for the sample concentration and a display column 24b for the measurement value. In this embodiment, the calibration curve generator 30 (see FIG. 3) generates the calibration curve 21 using the blank sample 90 and the five reference samples 91, and thus the table 24 shows the sample concentrations and measurement values of the blank sample 90 and the five reference samples 91 (a first reference sample, a second reference sample, a third reference sample, a fourth reference sample, and a fifth reference sample).

The plurality of reference samples 91 are held in the rack 10 (see FIG. 3), and the blank sample 90 is stored in the blank sample reservoir 5 (see FIG. 3). Generally, the measurement status 22a (see FIG. 5) of the blank sample 90 stored in the blank sample reservoir 5, not in the rack 10, is not displayed. In such a case, the user cannot know whether the blank sample 90 is being measured or not.

### Display of Measurement Statuses

In this embodiment, as shown in a measurement status display screen 41 in FIG. 5, the display 2 (see FIG. 3) is configured to display at least the measurement status 22a of the blank sample 90 (see FIG. 3) under the control of the display controller 33 (see FIG. 3). In this embodiment, the display 2 is configured to display the measurement status 22a of the blank sample 90 stored in the blank sample reservoir 5 (see FIG. 3). In this embodiment, the display 2 is configured to display both the measurement status 22a of the blank sample 90 and the measurement statuses 22b of the plurality of reference samples 91 (see FIG. 3) when the calibration curve 21 (see FIG. 3) is generated. On the measurement status display screen 41 in FIG. 5, the measurement statuses 22b of the five samples, the first reference sample, the second reference sample, the third reference sample, the fourth reference sample, and the fifth reference sample, which have different concentrations, are displayed as the plurality of reference samples 91.

The display 2 is configured to display a list of the measurement status 22a of the blank sample 90 and the measurement statuses 22b of the plurality of reference samples 91 for each calibration curve 21 to be generated when the calibration curve 21 is generated.

In this embodiment, the display 2 is configured to display a test item 25 of the specimen sample together with the measurement status 22a of the blank sample 90 and the measurement statuses 22b of the plurality of reference samples 91. As the test item 25, the item name of a test to be performed on the object to be tested or a test code corresponding to the item name of the test is displayed.

The display 2 is configured to display the test item 25, the sample names 26 of the blank sample 90 and the plurality of reference samples 91 to be measured, the arrangement information 23 of the plurality of reference samples 91 on the rack 10, and the measurement statuses 22. The arrangement information 23 includes information on the rack 10 on which the reference samples 91 are arranged, and information on the positions in the rack 10. For example, the arrangement information 23 "C002-1" indicates that the sample is arranged at a first position of the rack 10 named C002.

The display 2 is configured to display a list of the test item 25, the sample names 26 of the blank sample 90 and the plurality of reference samples 91, the arrangement information 23, and the measurement statuses 22 in a table format.

In this embodiment, the display 2 is configured to sequentially display, as the measurement status 22a of the blank sample 90 and the measurement statuses 22b of the plurality of reference samples 91, any one of before measurement, measurement in progress, measurement completed, and measurement failed according to the measurement statuses 22. The measurement statuses 22 displayed on the measurement status display screen 41 are sequentially updated according to changes in the measurement statuses 22 from the start to the end of generation of the calibration curve 21.

The blank sample 90 in this embodiment is stored in the blank sample reservoir 5 and is not arranged on the rack 10. Therefore, there is no arrangement information 23 corresponding to the blank sample 90. Therefore, as shown in FIG. 5, the display 2 displays the measurement status 22a of the blank sample 90 such that the user can know that there is no arrangement information 23 of the blank sample 90. Specifically, the display 2 is configured to display "- (hyphen)" in the column of the arrangement information 23 of the blank sample 90. Thus, the user can easily distinguish between a row indicating the measurement status 22a of the blank sample 90 and rows indicating the measurement statuses 22b of the reference samples 91 by checking the column of the arrangement information 23. As long as the blank sample 90 and the reference samples 91 can be distinguished, anything other than "- (hyphen)" may be displayed in the column of the arrangement information 23 of the blank sample 90. The display 2 may be configured to display words indicating the blank sample reservoir 5 ("blank sample reservoir", for example) in the column of the arrangement information 23 of the blank sample 90, for example. Moreover, nothing needs to be displayed in the column of the arrangement information 23 of the blank sample 90.

### Control to Display Measurement Status Screen

The configuration of the processor 3 for performing a control to display the measurement status display screen 41 (see FIG. 5) is now described with reference to FIG. 6.

The arrangement information acquirer 31 acquires the arrangement information 23 stored in the storage 4. Then, the arrangement information acquirer 31 outputs the acquired arrangement information 23 to the display controller 33.

Furthermore, the measurement status acquirer 32 acquires the measurement statuses 22 of the samples. Specifically, the measurement status acquirer 32 acquires the measurement status 22a (see FIG. 5) of the blank sample 90 and the measurement statuses 22b (see FIG. 5) of the plurality of reference samples 91. The measurement status acquirer 32 acquires, as the measurement status 22, whether each of the blank sample 90 and the plurality of reference samples 91 corresponds to a status of before measurement, measurement in progress, measurement completed, or measurement failed.

For a sample in the specimen measurement unit 1 that is being measured, the measurement status acquirer 32 acquires "measurement in progress" as the measurement status 22. For a sample of which the measurement data 20 have been stored in the storage 4, the measurement status acquirer 32 acquires "measurement completed" as the measurement status 22. For a sample that is not being measured in the specimen measurement unit 1 and of which the measurement data 20 have not been stored in the storage 4, the measurement status acquirer 32 acquires "before measurement" as the measurement status 22. For a sample for which acquisition of the measurement data 20 was not completed due to an error or the like, the measurement status acquirer 32 acquires "measurement failed" as the measurement status 22.

The measurement status acquirer 32 outputs the acquired measurement statuses 22 to the display controller 33.

The display controller 33 acquires the arrangement information 23 output from the arrangement information acquirer 31 and the measurement statuses 22 output from the measurement status acquirer 32. Then, the display controller 33 generates the measurement status display screen 41 (see FIG. 5) including the measurement statuses 22 and the arrangement information 23, and outputs it to the display 2.

The display 2 displays the measurement status display screen 41 output from the display controller 33.

### Process to Display Calibration Curve

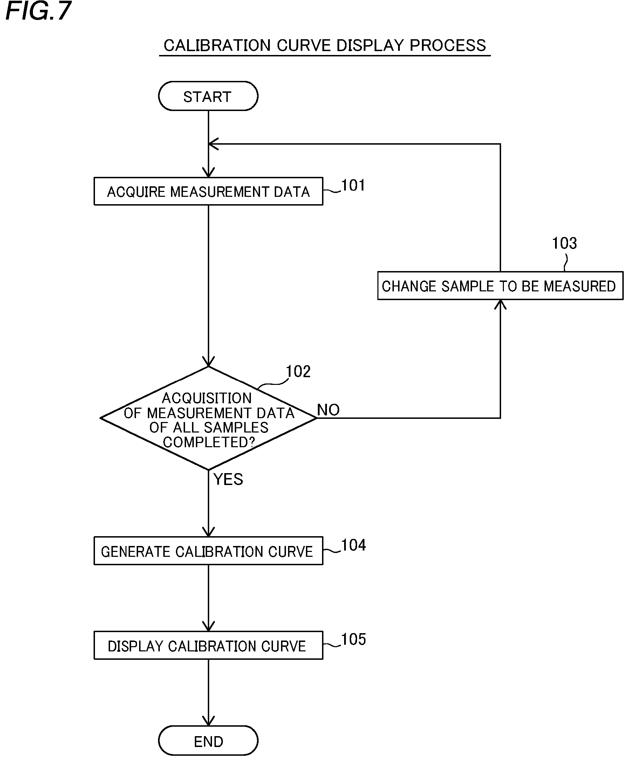

A calibration curve generation method executed by the specimen sample analyzer 100 (see FIG. 3) according to this embodiment is now described with reference to FIG. 7. The calibration curve generation method executed by the specimen sample analyzer 100 is a method for generating the calibration curve 21 (see FIG. 3) to acquire the analysis results of the specimen sample based on the measurement data 20 (see FIG. 3) acquired by measuring the specimen sample. A process to display the calibration curve 21 shown in FIG. 7 is started when the operator inputs an operation to generate the calibration curve 21 via the input receiver 9 (see FIG. 1).

In step 101, the specimen measurement unit 1 (see FIG. 3) acquires the measurement data 20.

In step 102, the processor 3 determines whether or not the measurement data 20 of all samples have been acquired. In this embodiment, the processor 3 determines whether or not the measurement data 20 of the blank sample 90 (see FIG. 3) and the measurement data 20 of all of the five reference samples 91 (see FIG. 3) have been acquired. When the measurement data 20 of all samples have not been acquired, the process advances to step 103. When the measurement data 20 of all samples have been acquired, the process advances to step 104.

In step 103, the processor 3 controls the sample suction and discharge mechanism 8 (see FIG. 1) to change the sample of which the measurement data 20 are to be acquired. After that, the process advances to step 101.

When the process advances from step 102 to step 104, in step 104, the calibration curve generator 30 (see FIG. 1) generates the calibration curve 21 based on the measurement data 20. In this embodiment, the calibration curve generator 30 generates the calibration curve 21 based on the measurement data 20a (see FIG. 3) of the blank sample 90 and the measurement data 20b (see FIG. 3) of the five reference samples 91.

In step 105, the display controller 33 outputs the calibration curve 21 to the display 2. The display 2 displays the calibration curve 21 output from the display controller 33. Then, the process is terminated.

In this embodiment, the specimen sample analyzer 100 performs a quantitative analysis of the object to be tested based on the generated calibration curve 21 and the measurement value of the specimen sample containing the object to be tested. Specifically, the specimen sample analyzer 100 acquires the content of the object to be tested contained in the specimen sample based on the calibration curve 21 and the measurement value of the specimen sample containing the object to be tested. Furthermore, the specimen sample analyzer 100 displays the acquired content of the object to be tested on the display 2.

### Process to Display Measurement Statuses

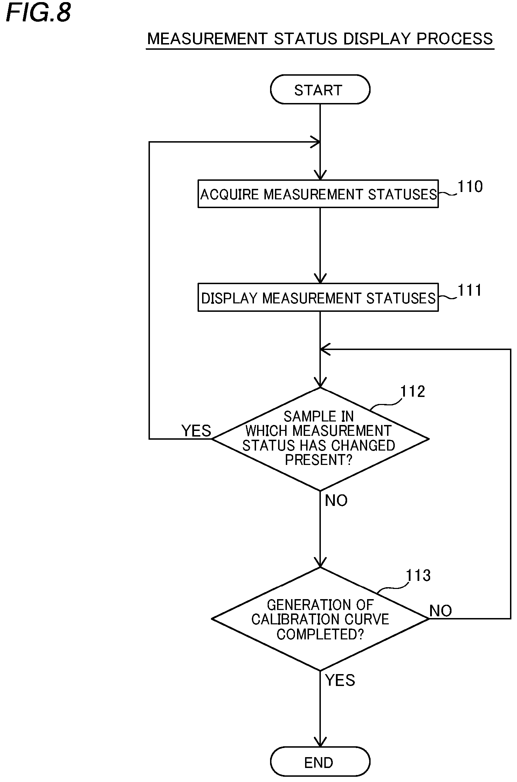

A process to display the measurement statuses 22 (see FIG. 6) is now described with reference to FIG. 8. The process to display the measurement statuses 22 shown in FIG. 8 is started when the process to generate the calibration curve 21 (see FIG. 3) is started.

In step 110, the measurement status acquirer 32 (see FIG. 6) acquires the measurement statuses 22 (see FIG. 5). Specifically, the measurement status acquirer 32 acquires both the measurement status 22a (see FIG. 5) of the blank sample 90 (see FIG. 3) and the measurement statuses 22b (see FIG. 5) of the plurality of reference samples 91 (see FIG. 3).

In step 111, the display controller 33 (see FIG. 6) displays the measurement statuses 22 on the display 2. In step 111, the display controller 33 displays at least the measurement status 22a of the blank sample 90 that does not contain the object to be tested. In this embodiment, the display controller 33 displays both the measurement status 22a of the blank sample 90 and the measurement statuses 22b of the plurality of reference samples 91.

In step 112, the processor 3 (see FIG. 1) determines whether or not there is a sample in which the measurement status 22 has changed. When there is a sample in which the measurement status 22 has changed, the process advances to step 110. When there is no sample in which the measurement status 22 has changed, the process advances to step 113.

In step 113, the processor 3 determines whether or not generation of the calibration curve 21 is completed. When generation of the calibration curve 21 is not completed, the process advances to step 112. When generation of the calibration curve 21 is completed, the process is terminated.

### Advantages of This Embodiment

In this embodiment, the following advantages are obtained.

In this embodiment, as described above, the specimen sample analyzer 100 includes the specimen measurement unit 1 configured to measure the specimen sample, the calibration curve generator 30 configured to generate the calibration curve 21 to be used in the analysis of the specimen sample based on the measurement data 20 of the specimen sample acquired by the specimen measurement unit 1, and the display 2 configured to display at least the measurement status 22a of the blank sample 90 that does not contain the object to be tested.

Accordingly, the user can know at least the measurement status 22a of the blank sample 90 when the calibration curve 21 is generated. Consequently, when the blank sample 90 is measured to generate the calibration curve 21, the user can easily know whether the blank sample 90 is being measured or not.

In this embodiment, as described above, the calibration curve generation method is a calibration curve generation method for generating the calibration curve 21 to acquire the analysis results of the specimen sample based on the measurement data 20 acquired by measuring the specimen sample, and includes a step of acquiring the measurement data 20, a step of generating the calibration curve 21 based on the measurement data 20, and a step of displaying at least the measurement status 22a of the blank sample 90 that does not contain the object to be tested.

Accordingly, similarly to the specimen sample analyzer 100 described above, it is possible to provide the calibration curve generation method that allows the user to easily know whether the blank sample 90 is being measured or not when the blank sample 90 is measured to generate the calibration curve 21.

In the embodiment described above, with the following configurations, the following advantages are further obtained.

That is, in this embodiment, as described above, the specimen measurement unit 1 is configured to acquire the measurement data 20a of the blank sample 90 and the measurement data 20b of the plurality of reference samples 91 with known concentrations of the object to be tested, the calibration curve generator 30 is configured to generate the calibration curve 21 based on the measurement data 20a of the blank sample 90 acquired by the specimen measurement unit 1 and the measurement data 20b of the plurality of reference samples 91 acquired by the specimen measurement unit 1, and the display 2 is configured to display both the measurement status 22a of the blank sample 90 and the measurement statuses 22b of the plurality of reference samples 91 when the calibration curve 21 is generated. Accordingly, both the measurement status 22a of the blank sample 90 and the measurement statuses 22b of the plurality of reference samples 91 when the calibration curve 21 is generated are displayed, and thus the user can know both the measurement status 22a of the blank sample 90 and the measurement statuses 22b of the plurality of reference samples 91 when the calibration curve 21 is generated. Consequently, when the calibration curve 21 is generated, the user can know the measurement status 22 of each sample to easily know the generation status of the calibration curve 21.

In this embodiment, as described above, the specimen sample analyzer 100 further includes the blank sample reservoir 5 configured to store the blank sample 90, the specimen measurement unit 1 is configured to measure the blank sample 90 stored in the blank sample reservoir 5, and the display 2 is configured to display the measurement status 22a of the blank sample 90 stored in the blank sample reservoir 5. For example, when the blank sample 90 is arranged on the rack 10 together with the plurality of reference samples 91 and measured to generate the calibration curve 21, the measurement status 22a of the blank sample 90 is displayed in the same manner as the measurement statuses 22b of the plurality of reference samples 91. However, when the blank sample 90 stored in the blank sample reservoir 5 provided in the specimen sample analyzer 100 is used, the measurement status 22a of the blank sample 90 is not displayed. Therefore, with the configuration described above, the measurement status 22a of the blank sample 90 stored in the blank sample reservoir 5 is displayed, and thus even when the blank sample 90 stored in the blank sample reservoir 5 is measured to generate the calibration curve 21, the user can easily know the measurement status 22a of the blank sample 90.

In this embodiment, as described above, the blank sample 90 is the water stored in the blank sample reservoir 5. Accordingly, the measurement status 22 of the water stored in the blank sample reservoir 5 is displayed, and thus the present invention is applicable to the specimen sample analyzer 100 that uses the water stored in the blank sample reservoir 5 as the blank sample 90.

In this embodiment, as described above, the display 2 is configured to sequentially display, as the measurement status 22a of the blank sample 90 and the measurement statuses 22b of the plurality of reference samples 91, any one of before measurement, measurement in progress, measurement completed, and measurement failed according to the measurement statuses 22. Accordingly, the measurement status 22a of the blank sample 90 is sequentially displayed as any one of before measurement, measurement in progress, measurement completed, and measurement failed, and thus the user can sequentially know the details of the measurement status 22a of the blank sample 90 and the measurement statuses 22b of the plurality of reference samples 91.

In this embodiment, as described above, the display 2 is configured to display a list of the measurement status 22a of the blank sample 90 and the measurement statuses 22b of the plurality of reference samples 91 for each calibration curve 21 to be generated when the calibration curve 21 is generated. Accordingly, the user can visually easily know the measurement status 22a of the blank sample 90 and the measurement statuses 22b of the plurality of reference samples 91, both of which correspond to the calibration curve 21 being generated. Consequently, the user can easily know the generation status of the calibration curve 21.

In this embodiment, as described above, the display 2 is configured to further display the test item 25 of the specimen sample, together with the measurement status 22a of the blank sample 90 and the measurement statuses 22b of the plurality of reference samples 91. Accordingly, the user can check the test item 25 of the specimen sample as well as the measurement status 22a of the blank sample 90 and the measurement statuses 22b of the plurality of reference samples 91. Consequently, the user can easily know what test item 25 the measurement status 22a of the blank sample 90 and the measurement statuses 22b of the plurality of reference samples 91 are for generating the calibration curve 21 for, and thus user convenience can be improved.

In this embodiment, as described above, the specimen sample analyzer 100 further includes the rack placement area 6 configured to allow the rack 10 on which the plurality of reference samples 91 are arranged to be arranged therein, and the arrangement information acquirer 31 configured to acquire the arrangement information 23 of the reference samples 91 arranged on the rack 10, and the display 2 is configured to display the test item 25, the sample names 26 of the blank sample 90 and the plurality of reference samples 91 to be measured, the arrangement information 23 of the plurality of reference samples 91 on the rack 10, and the measurement statuses 22. The plurality of reference samples 91 are arranged on the rack 10, but the blank sample 90 is not arranged on the rack 10. Therefore, the arrangement information 23 is not displayed for the blank sample 90. Therefore, with the configuration described above, the arrangement information 23 is displayed for the plurality of reference samples 91, but not for the blank sample 90, and thus the user can easily distinguish at a glance between the measurement status 22a of the blank sample 90 and the measurement statuses 22b of the plurality of reference samples 91 based on a difference in the display content of the arrangement information 23.

In this embodiment, as described above, the display 2 is configured to display a list of the test item 25, the sample names 26 of the blank sample 90 and the plurality of reference samples 91, the arrangement information 23, and the measurement statuses 22 in a table format. Accordingly, a list of the test item 25, the sample names 26 of the blank sample 90 and the plurality of reference samples 91, the arrangement information 23, and the measurement statuses 22 is displayed in a table format, and thus the user can easily know the test item 25, the sample names 26 of the blank sample 90 and the plurality of reference samples 91, the arrangement information 23, and the measurement statuses 22 at a glance.

In this embodiment, as described above, the display 2 is configured to further display the generated calibration curve 21. Accordingly, the user can check the generated calibration curve 21. Consequently, the user can check the generated calibration curve 21 while checking the measurement statuses 22 when the calibration curve 21 is generated, and thus this also improves user convenience.

### Modified Examples

The embodiment disclosed this time must be considered as illustrative in all points and not restrictive. The scope of the present invention is not shown by the above description of the embodiment but by the scope of claims for patent, and all modifications (modified examples) within the meaning and scope equivalent to the scope of claims for patent are further included.

For example, while the example in which the display 2 displays both the measurement status 22a of the blank sample 90 and the measurement statuses 22b of the plurality of reference samples 91 has been shown in the aforementioned embodiment, the present invention is not limited to this. For example, as long as the display 2 displays the measurement status 22a of the blank sample 90, the measurement statuses 22b of the plurality of reference samples 91 may not be displayed. However, when the display 2 does not display the measurement statuses 22b of the plurality of reference samples 91, the user cannot know the measurement statuses 22b of the plurality of reference samples 91. Therefore, the display 2 is preferably configured to display both the measurement status 22a of the blank sample 90 and the measurement statuses 22b of the plurality of reference samples 91.

While the example in which the blank sample 90 is the water stored in the blank sample reservoir 5 has been shown in the aforementioned embodiment, the present invention is not limited to this. For example, the blank sample 90 may not be water, but may be any solvent that corresponds to the solvent for dissolving the object to be tested.

While the example in which the display 2 displays any one of before measurement, measurement in progress, measurement completed, and measurement failed as the measurement status 22a of the blank sample 90 and the measurement statuses 22b of the plurality of reference samples 91 has been shown in the aforementioned embodiment, the present invention is not limited to this. The display 2 may display a measurement status 22 other than before measurement, measurement in progress, measurement completed, and measurement failed as the measurement status 22a of the blank sample 90 and the measurement statuses 22b of the plurality of reference samples 91. For example, the display 2 may display a measurement status 22 such as waiting for measurement instead of before measurement.

While the example in which the display 2 displays a list of the measurement status 22a of the blank sample 90 and the measurement statuses 22b of the plurality of reference samples 91 for each calibration curve 21 to be generated has been shown in the aforementioned embodiment, the present invention is not limited to this. As long as the measurement status 22a of the blank sample 90 and the measurement statuses 22b of the plurality of reference samples 91 are displayed, any display mode may be used on the display 2.

While the example in which the specimen sample analyzer 100 includes the rack placement area 6 has been shown in the aforementioned embodiment, the present invention is not limited to this. The specimen sample analyzer 100 may not include the rack placement area 6.

While the example in which the arrangement information acquirer 31 is configured as a functional block of the processor 3 and acquires the arrangement information 23 stored in the storage 4 has been shown in the aforementioned embodiment, the present invention is not limited to this. For example, the arrangement information acquirer may be configured as a reader that reads code information provided on each of the containers in which the plurality of reference samples 91 are accommodated. Specifically, the arrangement information acquirer may be a barcode reader or a QR code (registered trademark) reader that acquires the arrangement information 23 by reading a barcode or a QR code (registered trademark) provided on each of the containers in which the plurality of reference samples 91 are accommodated.

While the example in which the display 2 displays the test item 25, the sample names 26, the arrangement information 23, and the measurement statuses 22 has been shown in the aforementioned embodiment, the present invention is not limited to this. As long as the display 2 displays the measurement statuses 22, the test item 25, the sample names 26, and the arrangement information 23 may not be displayed. However, when the display 2 does not display the test item 25, the sample names 26, and the arrangement information 23, the user cannot know what samples are used to generate the calibration curve 21 and for what test. Therefore, the display 2 is preferably configured to display the test item 25, the sample names 26, the arrangement information 23, and the measurement statuses 22.

While the example in which the display 2 displays a list of the test item 25, the sample names 26, the arrangement information 23, and the measurement statuses 22 in a table format has been shown in the aforementioned embodiment, the present invention is not limited to this. As long as the display 2 displays the test item 25, the sample names 26, the arrangement information 23, and the measurement statuses 22, any display format may be used.

While the example in which the display 2 displays the calibration curve 21 has been shown in the aforementioned embodiment, the present invention is not limited to this. For example, the display 2 may not display the calibration curve 21. However, when the display 2 does not display the calibration curve 21, the user cannot check the calibration curve 21. Therefore, the display 2 is preferably configured to display the calibration curve 21.

While the example in which the display 2 displays the concentrations and measurement values of the samples together with the calibration curve 21 has been shown in the aforementioned embodiment, the present invention is not limited to this. For example, as long as the display 2 displays the calibration curve 21, the concentrations and measurement values of the samples may not be displayed. However, when the display 2 displays only the calibration curve 21, it is not possible to know what concentration sample measurement values were used to generate the calibration curve 21. Therefore, the display 2 is preferably configured to display the concentrations and measurement values of the samples together with the calibration curve 21.

While the example in which the calibration curve generator 30 and the arrangement information acquirer 31 are configured as functional blocks of the processor 3 included in the specimen sample analyzer 100 has been shown in the aforementioned embodiment, the present invention is not limited to this. For example, the calibration curve generator 30 and the arrangement information acquirer 31 may be configured as functional blocks of a processor of an information processing device provided separately from the specimen sample analyzer 100. That is, the calibration curve generation method in the embodiment described above may be executed in a specimen sample analysis system including a measurement device and an information processing device.

### Aspects

It will be appreciated by those skilled in the art that the exemplary embodiments described above are specific examples of the following aspects.

### (Item 1)

A specimen sample analyzer comprising:
a specimen measurement unit configured to measure a specimen sample;
a calibration curve generator configured to generate a calibration curve to be used in an analysis of the specimen sample based on measurement data of the specimen sample acquired by the specimen measurement unit; and
a display configured to display at least a measurement status of a blank sample that does not contain an object to be tested.

### (Item 2)

The specimen sample analyzer according to item 1, wherein
the specimen measurement unit is configured to acquire measurement data of the blank sample and measurement data of a plurality of reference samples with known concentrations of the object to be tested;
the calibration curve generator is configured to generate the calibration curve based on the measurement data of the blank sample acquired by the specimen measurement unit and the measurement data of the plurality of reference samples acquired by the specimen measurement unit; and
the display is configured to display both the measurement status of the blank sample and measurement statuses of the plurality of reference samples when the calibration curve is generated.

### (Item 3)

The specimen sample analyzer according to item 1, further comprising:
a blank sample reservoir configured to store the blank sample; wherein
the specimen measurement unit is configured to measure the blank sample stored in the blank sample reservoir; and
the display is configured to display the measurement status of the blank sample stored in the blank sample reservoir.

### (Item 4)

The specimen sample analyzer according to item 3, wherein the blank sample is water stored in the blank sample reservoir.

### (Item 5)

The specimen sample analyzer according to item 2, wherein the display is configured to sequentially display, as the measurement status of the blank sample and the measurement statuses of the plurality of reference samples, any one of before measurement, measurement in progress, measurement completed, and measurement failed according to the measurement statuses.

### (Item 6)

The specimen sample analyzer according to item 2 or 5, wherein the display is configured to display a list of the measurement status of the blank sample and the measurement statuses of the plurality of reference samples for each calibration curve to be generated when the calibration curve is generated.

### (Item 7)

The specimen sample analyzer according to item 5 or 6, wherein the display is configured to further display a test item of the specimen sample, together with the measurement status of the blank sample and the measurement statuses of the plurality of reference samples.

### (Item 8)

The specimen sample analyzer according to item 7, further comprising:
a rack placement area configured to allow a rack on which the plurality of reference samples are arranged to be arranged therein; and
an arrangement information acquirer configured to acquire arrangement information of the plurality of reference samples arranged on the rack; wherein
the display is configured to display the test item, sample names of the blank sample and the plurality of reference samples to be measured, the arrangement information of the plurality of reference samples on the rack, and the measurement statuses.

### (Item 9)

The specimen sample analyzer according to item 8, wherein the display is configured to display a list of the test item, the sample names of the blank sample and the plurality of reference samples, the arrangement information, and the measurement statuses in a table format.

### (Item 10)

The specimen sample analyzer according to any one of items 1 to 9, wherein the display is configured to further display a generated calibration curve.

### (Item 11)

A calibration curve generation method for generating a calibration curve to acquire an analysis result of a specimen sample based on measurement data acquired by measuring the specimen sample, the calibration curve generation method comprising steps of:
acquiring the measurement data;
generating the calibration curve based on the measurement data; and
displaying at least a measurement status of a blank sample that does not contain an object to be tested.

### Description of Reference Numerals

1: specimen measurement unit
2: display
5: blank sample reservoir
6: rack placement area
10: rack
20: measurement data
20a: measurement data of the blank sample
20b: measurement data of the reference sample
21: calibration curve
22: measurement status
22a: measurement status of the blank sample
22b: measurement status of the reference sample
23: arrangement information
25: test item
26: sample name
30: calibration curve generator
31: arrangement information acquirer
90: blank sample
91: reference sample
100: specimen sample analyzer

## Claims

1. A specimen sample analyzer comprising:
a specimen measurement unit configured to measure a specimen sample;
a calibration curve generator configured to generate a calibration curve to be used in an analysis of the specimen sample based on measurement data of the specimen sample acquired by the specimen measurement unit; and
a display configured to display at least a measurement status of a blank sample that does not contain an object to be tested.

2. The specimen sample analyzer according to claim 1, wherein
the specimen measurement unit is configured to acquire measurement data of the blank sample and measurement data of a plurality of reference samples with known concentrations of the object to be tested;
the calibration curve generator is configured to generate the calibration curve based on the measurement data of the blank sample acquired by the specimen measurement unit and the measurement data of the plurality of reference samples acquired by the specimen measurement unit; and
the display is configured to display both the measurement status of the blank sample and measurement statuses of the plurality of reference samples when the calibration curve is generated.

3. The specimen sample analyzer according to claim 1, further comprising:
a blank sample reservoir configured to store the blank sample; wherein
the specimen measurement unit is configured to measure the blank sample stored in the blank sample reservoir; and
the display is configured to display the measurement status of the blank sample stored in the blank sample reservoir.

4. The specimen sample analyzer according to claim 3, wherein the blank sample is water stored in the blank sample reservoir.

5. The specimen sample analyzer according to claim 2, wherein the display is configured to sequentially display, as the measurement status of the blank sample and the measurement statuses of the plurality of reference samples, any one of before measurement, measurement in progress, measurement completed, and measurement failed according to the measurement statuses.

6. The specimen sample analyzer according to claim 5, wherein the display is configured to display a list of the measurement status of the blank sample and the measurement statuses of the plurality of reference samples for each calibration curve to be generated when the calibration curve is generated.

7. The specimen sample analyzer according to claim 6, wherein the display is configured to further display a test item of the specimen sample, together with the measurement status of the blank sample and the measurement statuses of the plurality of reference samples.

8. The specimen sample analyzer according to claim 7, further comprising:
a rack placement area configured to allow a rack on which the plurality of reference samples are arranged to be arranged therein; and
an arrangement information acquirer configured to acquire arrangement information of the plurality of reference samples arranged on the rack; wherein
the display is configured to display the test item, sample names of the blank sample and the plurality of reference samples to be measured, the arrangement information of the plurality of reference samples on the rack, and the measurement statuses.

9. The specimen sample analyzer according to claim 8, wherein the display is configured to display a list of the test item, the sample names of the blank sample and the plurality of reference samples, the arrangement information, and the measurement statuses in a table format.

10. The specimen sample analyzer according to claim 1, wherein the display is configured to further display a generated calibration curve.

11. A calibration curve generation method for generating a calibration curve to acquire an analysis result of a specimen sample based on measurement data acquired by measuring the specimen sample, the calibration curve generation method comprising steps of:
acquiring the measurement data;
generating the calibration curve based on the measurement data; and
displaying at least a measurement status of a blank sample that does not contain an object to be tested.
